# EUROPEAN PATENT SPECIFICATION

(11) **EP 0 677 410 B1**
(45) Date of publication and mention of the grant of the patent: **23.09.1998**
(21) Application number: 95830148.3
(22) Date of filing: 12.04.1995
(51) Int. Cl.: B60J 7/06

(54) **Guide for the sliding devices of truck tarpaulins**
Führung für Gleitvorrichtungen von Lastkraftwagenplanen
Guide pour dispositifs coulissants de bâches de camions

(30) Priority: 13.04.1994 IT MI940274 U
(43) Date of publication of application: 18.10.1995
(73) Proprietor: Dona', Severino, Caleppio di Settala (Milano) (IT)
(72) Inventor: Dona', Severino, Caleppio di Settala (Milano) (IT)
(74) Representative: Pizzoli, Pasquale Vincenzo

(56) References cited:
- EP-A- 0 069 391
- EP-A- 0 577 892
- DE-A- 3 340 063
- DE-A- 3 345 962
- SE-B- 450 360
- US-A- 3 560 045

## Description

The present invention relates to a guide for the sliding tarpaulins of trucks, and in particular to an improved guide for the sliding devices of the tarpaulins for dumping trucks.

It is known that trucks are generally provided with covering tarpaulins supported by sliding devices which allow to open or close the tarpaulins in an easy and quick way. Such devices generally include a row of arches or crossbars supporting the tarpaulin and having end arms on which wheels or rollers, which can horizontally slide in suitable guides, are mounted. In their simplest form, such guides consist in a metallic section comprising a runner for the wheels provided with a holding side and a cover which serve to prevent the wheels from coming out of the runner. The cross-section of this kind of guide is J-shaped.

Guides having a more and more complex cross-section have been developed over the years in order to make the devices for covering trucks ever simpler and quicker. However, this did not concern dumping trucks because a tarpaulin was not usually provided for this kind of trucks. Recent provisions of the law have instead obliged to cover also the dumping trucks, on which the known guides, which may be jammed during the unloading of the truck by particles of the carried material, cannot be mounted. As a matter of fact, the carried material, mainly granular (sand, gravel, corns), is unloaded by overturning the dump body of the truck, whereby particles of the carried material may rebound during the unloading, thus getting into the runner of the guides with consequent blocking of the wheels.

EP-A-0577892 discloses a tarpaulin for use on a truck comprising a runner provided with a holding side and a upper cover extending downwards with a vertical wall parallel to the holding side, but the runner is not protected from external particles because it is not positioned between the holding side and the vertical wall, since in the said known guide the lower portion of the runner does not extend toward the vertical wall.

The object of the present invention is to provide a guide wherein the runner for the wheels is made inaccessible to the material particles thrown during their unloading. This object is achieved according to the present invention by means of a guide the main features of which are specified in Claim 1.

The structural characteristics and the advantages of the improved guide according to the present invention will be apparent to those skilled in the art from the following detailed description of an embodiment thereof referring to the annexed drawings wherein:
Fig. 1 shows a cross-sectional view of the simplest embodiment of the present invention;
Fig. 2 shows a cross-sectional view of a variation of the embodiment of Fig. 1 which shows also the position of the wheel hanging inside the guide, as well as the relative connecting arms at the end of a tarpaulin-supporting arch; and
Fig. 3 shows a side view of an element of the sliding device of the tarpaulin.

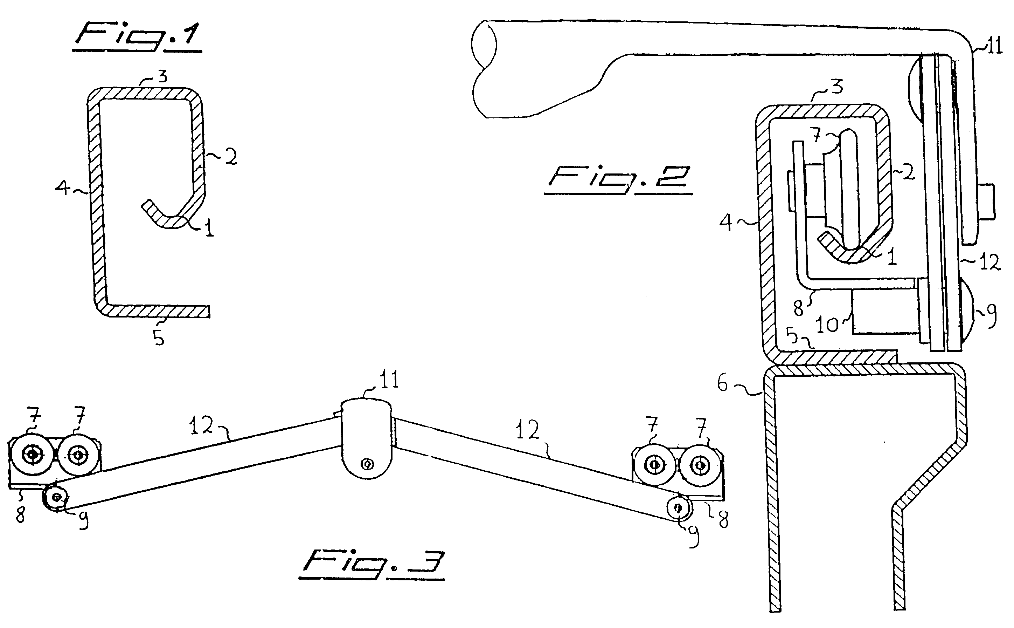

Referring to Fig. 1, there is seen that in the improved guide according to the present invention runner 1, holding side 2 and cover 3 are completed by a vertical wall 4, turned downwards and parallel to side 2. Wall 4 is provided with a horizontal projection 5 located under runner 1 at a short distance therefrom. As it is clear from the drawing, the J-shaped cross-section of the aforesaid known guides is combined with an additional L-shaped cross-section placed in front of it. The distance between the horizontal arm of the L and the lower curve of the J, which stands above it, must be sufficient for the passage of the brackets connecting the wheels to the arms which in turn connect the brackets to the ends of the tarpaulin-supporting arches. This is pointed out in Fig. 2.

Horizontal projection 5 also serves to fix the guide onto the upper edge of the dump body sides of the truck. The guide must be fixed so that side 4 is a continuation of the dump body side. With this arrangement, it is apparent that the particles of material contained in the dump body, even if they randomly rebound during the unloading of the material, may never reach runner 1 of the guide which is outside wall 4.

Referring to Fig. 2, there is seen that the guide according to the present invention is mounted at the top of side 6 of the truck dump body by fixing the horizontal projection 5 thereon. This fixing can be carried out, for example, by welding projection 5 onto the top flat edge of side 6 of the truck dump body. Other suitable fixing systems are within the range of those skilled in the art so that they do not require any particular description.

Wheel 7, which is rotatably pivoted on a bracket 8, is positioned inside runner 1. Under bracket 8 there is fixed a pin 9, to which one of the arms 12 which complete the sliding device connected to the end of each tarpaulin-supporting arch 11 is pivoted.

In the figure there is seen how the distance between the lower part of the curve of runner 1 and the upper face of projection 5 is very small and just sufficient for the passage of the horizontal part of bracket 8 and pin 9 connected thereto. This significantly reduces the risk that solid particles might reach runner 1 even from the outside of the truck. In fact, such particles might never reach the inside of the guide, and in particular runner 1, regardless of the angle from which they would be thrown toward the guide. At most, such particles might reach the upper face of projection 5, but they would be removed therefrom by bracket 8 and/or by the underlying seat 9 of pin 10 during the sliding movement of the tarpaulin.

The guide according to the present invention is preferably made of a sheet steel about 4 mm thick. Such a sheet is bent up to give it the shape having the cross-section shown in Fig. 1. The guide could also be produced by means of an aluminum extrusion, but this would involve thicker walls as well as other manufacturing problems well known to those skilled in the art.

Referring to Fig. 3, there is seen that the element of the sliding device of the tarpaulin is pivoted to the end of arch 11, from which two arms 12 located symmetrically thereto branch off. Bracket 8, which supports a pair of wheels 7, is fixed at the free end of each arm 12 by means of pin 9. Both wheels can slide inside runner 1 of the guide.

## Claims

1. A guide for the sliding devices of the truck tarpaulins including a runner (1) provided with a holding side (2) and an upper cover (3), extending downwards with a wall (4) parallel to the holding side (2) and ending with a horizontal projection (5) located under the runner (1) at a short distance therefrom, the runner (1) being arranged between the holding side (2) and said wall (4) so as to be protected from external particles, characterized in that the lower portion of the runner (1) is substantially V-shaped and extends toward the vertical wall (4).

2. A guide according to the previous claim, characterized in that the groove of the runner (1) is dimensioned for the rolling of a single wheel or a line of single wheels.

3. A guide according to any previous claim, characterized in that it is made of a single bent sheet steel.

## Patentansprüche

1. Führung für Gleitvorrichtungen von Lastkraftwagenplanen umfassend eine Laufschiene (1), die mit einer Halteseite (2) und einer oberen, sich nach unten mit einer Wand (4) parallel zu der Halteseite (2) erstreckenden und mit einem horizontalen, unter der Laufschiene (1) in einem kurzen Abstand davon gelegenen Vorsprung (5) endenden Abdeckung (3) versehen ist, wobei die Laufschiene (1) zwischen der Halteseite (2) und der besagten Wand (4) angeordnet ist, um vor äußeren Partikeln geschützt zu sein, dadurch gekennzeichnet, daß der untere Abschnitt der Laufschiene (1) im wesentlichen V-förmig ist und sich in Richtung der vertikalen Wand (4) erstreckt.

2. Führung nach dem vorstehenden Anspruch, dadurch gekennzeichnet, daß die Nut der Laufschiene (1) für das Rollen eines einzelnen Rades oder einer Linie einzelner Räder dimensioniert ist.

3. Führung nach einem der vorstehenden Ansprüche, dadurch gekennzeichnet, daß sie aus einem einzelnen gebogenen Stahlblech hergestellt ist.

## Revendications

1. Guide pour les dispositifs de glissement des bâches imperméables de camion, comprenant un rail de roulement (1) pourvu d'un côté de maintien (2) et d'un recouvrement supérieur (3), se prolongeant vers le bas par une paroi (4) parallèle au côté de maintien (2) et se terminant par une partie en saillie horizontale (5) située au-dessous du rail de roulement (1) à une courte distance de celui-ci, le rail de roulement (1) étant disposé entre le côté de maintien (2) et la paroi (4) de manière à être protégé de particules extérieures, caractérisé en ce que la partie inférieure du rail de roulement (1) est sensiblement en forme de V et est orientée vers la paroi verticale (4).

2. Guide suivant la revendication précédente, caractérisé en ce que la gorge du rail de roulement (1) est dimensionnée pour le roulement d'une roue unique ou d'une ligne de roues uniques.

3. Guide suivant une revendication précédente quelconque, caractérisé en ce qu'il est formé d'une tôle d'acier pliée unique.
